# EUROPÄISCHE PATENTSCHRIFT

(11) **EP 3 374 145 B1**
(45) Veröffentlichungstag und Bekanntmachung des Hinweises auf die Patenterteilung: **28.08.2019**
(21) Anmeldenummer: 16805272.8
(22) Anmeldetag: 07.11.2016
(51) Int. Cl.: B29C 45/14, B29C 45/27, B29C 45/46, H01F 27/245, H02K 15/12

(54) **VORRICHTUNG ZUM SPRITZGIESSEN UND UMSPRITZEN VON OBJEKTEN**
DEVICE FOR INJECTION MOULDING AND OVERMOULDING OBJECTS
DISPOSITIF DE MOULAGE D'OBJETS PAR INJECTION ET SUR MOULAGE

(30) Priorität: 09.11.2015 DE 102015119235
(43) Veröffentlichungstag der Anmeldung: 19.09.2018
(73) Patentinhaber: Selectrona GmbH, 01744 Dippoldiswalde-Reinholdshain (DE)
(72) Erfinder: ZSCHOKE, Kay-Uwe, 01744 Dippoldiswalde (DE)
(74) Vertreter: Sperling, Thomas
(86) Internationale Anmeldenummer: PCT/DE2016/100525
(87) Internationale Veröffentlichungsnummer: WO 2017/080544

(56) Entgegenhaltungen:
- EP-A2- 0 507 211
- DE-A1- 3 127 360
- FR-A1- 2 686 040
- JP-A- H05 318 540
- JP-A- S60 249 849

## Beschreibung

Die Erfindung betrifft eine Vorrichtung zum Spritzgießen und Umspritzen von Objekten, insbesondere zur Herstellung von mit einer Isolationsschicht ummantelten Blechpaketen. Die Vorrichtung weist ein oberes Element und ein unteres Element auf, welche ein zusammenhängendes Volumen aus einem Füllraum zur Aufnahme des Objekts und Gießwerkstoff sowie einem Anguss zur Aufnahme von Gießwerkstoff umschließen. Das obere Element ist dabei in Bezug auf das untere Element bewegbar.

Aus dem Stand der Technik bekannte Kerne von Statoren und Rotoren für Elektromotoren sind aus paketierten Blechlagen ausgebildet, welche möglichst dünnwandig ummantelt, insbesondere umgossen beziehungsweise umspritzt oder lackiert, sind. Die Ummantelung dient als Isolationsschicht für die als Spulen um die Kerne gewickelten Drähte.

Die aus den gestapelten Blechlagen zusammengesetzten Blechpakete weisen aufgrund der unterschiedlichen Stärken der Bleche abweichende äußere Abmessungen auf. Die Toleranz der Höhe beziehungsweise der Dicke der Blechpakete ergibt sich dabei aus der Toleranz der einzelnen Bleche beziehungsweise den Toleranzen der Einzellagen sowie dem Herstellungsprozess der Bleche und Blechpakete selbst.

Bei der Herstellung herkömmlicher Blechpakete werden die Blechlagen gestanzt und zum Blechpaket zusammen geprägt. Während der Herstellung wird die Dicke des Blechpaketes gemessen und über die Anzahl der für die Einhaltung der gewünschten Gesamtstärke benötigten Einzellagen entschieden.

Die aufgrund der großen Fläche und der großen Toleranz der Höhe der Blechpakete auftretenden abweichenden äußeren Abmessungen der unterschiedlichen Blechpakete müssen beim Umspritzen in einer Spritzgussform kompensiert werden.

Aus der EP 0 507 211 A1 geht eine Vorrichtung zur Herstellung eines mit einer Isolationsschicht versehenen, durch ein Blechpaket gebildeten Kerns einer elektrischen Spule hervor. Die Vorrichtung weist ein Spritzwerkzeug mit einer Spritzgussform aus einem ersten Teil und einem relativ zum ersten Teil bewegbaren zweiten Teil auf, wobei beide Teile unter Bildung jeweils einer mit Spritzgussmasse ausfüllbaren Kavität am Kern anliegen. Das zweite bewegbare Teil weist ein die Spritzgussform zusammen mit dem ersten Teil schließendes starres Werkzeugteil und ein sich auf dem Kern mit Vorsprüngen mit geringer Auflagefläche abstützendes, federnd gelagertes Teil auf. Der Kern liegt an erhabenen Teilen des ersten Teils der Spritzgussform an.

Mit der Vorrichtung werden beim Umspritzen des Kerns trotz unterschiedlicher Dicken des Kerns in Stapelrichtung der Bleche konstante Isolationsschichtdicken produziert. Dabei ist die Kavität, welche durch Spritzgussmasse ausgefüllt wird, relativ zur Oberfläche immer gleich groß. Die abweichenden äußeren Abmessungen der Kerne werden in der Vorrichtung durch ein variables und variierendes Volumen kompensiert.

In der FR 2 686 040 A1 wird eine Gussform zum Umspritzen von Metallelementen offenbart. Die Gussform ist mit einem oberen Element, einem mittleren Element und einem unteren Element dreigeteilt ausgebildet. Die Elemente umschließen in ihrer Gesamtheit ein zusammenhängendes Volumen, welches einen Füllraum zur Aufnahme des zu umspritzenden Metallelementes und von Gießwerkstoff sowie einen Anguss zur Aufnahme von Gießwerkstoff aufweist. Innerhalb des mittleren Elementes ist ein in Bezug auf die Gussform beweglicher Kolben angeordnet.

Aus dem Stand der Technik bekannte Vorrichtungen zum Spritzgießen können derart große Abweichungen der äußeren Abmessungen der Blechpakete mit einer Dosierung der Füllmenge in einer Spritzgussform mit konstantem oder variablem inneren Volumen nicht kompensieren. Vor allem in Mehrfachformen, das heißt in Formen zum zeitgleichen Umspritzen mehrerer unterschiedlich starker Blechpakete, können nicht alle auszufüllenden Kavitäten optimal, insbesondere kunststoffgerecht, gefüllt werden.

Bei herkömmlichen Vorrichtungen zum Spritzgießen mit variablem inneren Volumen können die variierenden Abmessungen der Blechpakete nur unter ebenfalls variierenden Abmessungen des ummantelten Blechpakets ausgeglichen werden, sodass die Blechpakete nach der Ummantelung bei gleichen Isolationsschichtdicken unterschiedliche äußere Abmessungen aufweisen.

Mit herkömmlichen Vorrichtungen zum Spritzgießen mit konstantem inneren Volumen und insbesondere konstanter Menge an Gießwerkstoff werden die Kavitäten bei variierenden Abmessungen der Blechpakete ungleich gefüllt. Eine jeweils an die Abmessungen des Blechpakets angepasste Menge an Gießwerkstoff macht den Herstellungsprozess sehr aufwändig und teuer.

Eine nicht optimale oder sogar ungünstige Füllung führt entweder zu einer Überladung der Kavität oder zu einer zu geringen Verdichtung des Materials zum Ummanteln des Blechpaketes. Die schlechte Füllung hat zudem starke Auswirkungen auf die Maßhaltigkeit der Teile und führt speziell an Geometrien mit hohen Toleranzanforderungen zu übermäßigen Maßabweichungen und damit zu Ausschuss.

Die Aufgabe der Erfindung besteht in der Bereitstellung einer Vorrichtung zum Spritzgießen und Umspritzen von Objekten, insbesondere von Blechpaketen, wobei die ummantelten Blechpakete trotz abweichender äußerer Abmessungen der Blechpakete nach dem Ummanteln die gleichen Abmessungen aufweisen sollen und somit hohe Anforderungen an die Maßhaltigkeit erfüllt werden können. Das Ummanteln der Blechpakete soll zudem mit einem verhältnismäßig geringen Materialeinsatz erfolgen. Die Vorrichtung soll konstruktiv einfach ausgebildet sowie mit minimalen Kosten herstellbar und zu warten sein. Der Betrieb der Vorrichtung und damit der Herstellungsprozess des Umspritzens der Objekte mit der Vorrichtung soll wirtschaftlich möglich sein, das heißt minimale Kosten verursachen.

Die Aufgabe wird durch den Gegenstand mit den Merkmalen des selbstständigen Patentanspruchs gelöst. Weiterbildungen sind in den abhängigen Patentansprüchen angegeben.

Die Aufgabe wird durch eine erfindungsgemäße Vorrichtung zum Spritzgießen und Umspritzen von Objekten, insbesondere zur Herstellung von mit einer Isolationsschicht ummantelten Blechpaketen, gelöst. Die Vorrichtung weist ein oberes Element und ein unteres Element auf, welche ein zusammenhängendes Volumen aus einem Füllraum zur Aufnahme des Objekts und Gießwerkstoff sowie einem Anguss zur Aufnahme von Gießwerkstoff umschließen. Dabei ist das obere Element in Bezug auf das untere Element bewegbar.

Bei den Angaben der verschiedenen Volumina ist zwischen dem gesamten inneren Volumen der Vorrichtung zum Spritzgießen, insbesondere der Spritzgussform, mit dem zusammenhängenden Volumen des Füllraums zur Aufnahme des zu ummantelnden Objekts zuzüglich des Volumens der Ummantelung um das Objekt sowie dem Volumen des Angusses zu unterscheiden. Das Volumen der Ummantelung des Objekts sowie das Volumen des Angusses wird mit Gießwerkstoff gefüllt.

Nach der Konzeption der Erfindung ist innerhalb des oberen Elementes ein in Bezug auf das obere Element beweglicher Kolben integriert angeordnet. Dabei ist die Lage des Kolbens abhängig von einer Abmessung des Objekts in einer axialen Richtung variierbar und der Kolben weist einen Absatz zum Verändern eines Volumens als Füllmengenausgleich des Gießwerkstoffes innerhalb des Angusses auf, sodass unabhängig von der Abmessung des Objekts in der axialen Richtung und eines mit der Abmessung des Objekts in der axialen Richtung variierenden Volumens das Gesamtvolumen für den Gießwerkstoff innerhalb der Vorrichtung konstant ist und die Vorrichtung mit einem konstanten Volumen an Gießwerkstoff gefüllt wird.

Der Kolben weist einen Abschnitt mit einer geringeren Dicke und einen Abschnitt mit einer größeren Dicke auf, welche in der axialen Richtung koaxial zueinander angeordnet sind. Der Abschnitt mit der größeren Dicke ist dabei als Absatz zum Verändern des Volumens als Füllmengenausgleich des Gießwerkstoffes innerhalb des Angusses ausgebildet. Der Abschnitt mit der geringeren Dicke ist am Umfang des Abschnitt mit der größeren Dicke angeordnet.

Das mit der Abmessung des Objekts in der axialen Richtung variierende Volumen ist dabei gleich dem mit dem Absatz des Kolbens veränderbaren Volumen als Füllmengenausgleich des Gießwerkstoffes innerhalb des Angusses. Der Anguss zur Aufnahme von Gießwerkstoff als sogenannter Materialüberlauf wird gleichsam als Füllmengenausgleich genutzt. Das Volumen des Materialüberlaufs wird dem Volumen des zu ummantelnden Objekts beziehungsweise Körpers, dessen Abmessung insbesondere in der axialen Richtung variiert, derart angepasst, dass stets die selbe Menge an Gießwerkstoff in das zusammenhängende Volumen aus Füllraum und Anguss abzüglich des Volumens des Objekts als Kavität eingefüllt wird. Der Füllmengenausgleich ist dabei in das Teilvolumen des Angusses verlagert. Die Steuerung des Füllmengenausgleichs beziehungsweise des Volumenausgleichs ist an die Abmessung des Objekts in axialer Richtung, insbesondere an die Höhe oder an die Dicke des Blechpaketes, gekoppelt.

Die aufgrund der großen Fläche und der großen Toleranz der Höhe der Blechpakete auftretenden abweichenden äußeren Abmessungen der unterschiedlichen Blechpakete werden in der Vorrichtung als Spritzgussform mit konstantem inneren Volumen über unterschiedlich große Füllmengen des Gießwerkstoffes als Material zum Ummanteln der Blechpakete, insbesondere Kunststoff, innerhalb des Füllraums kompensiert.

Unter dem Anguss ist insbesondere beim Spritzgießen von Kunststoff oder von Metall der Teil des Spritzlings zu verstehen, welcher nicht dem eigentlichen herzustellenden Formteil zuzurechnen ist und durch die in den Zuführungskanälen zur Gießform erstarrte Schmelze entsteht.

Nach einer bevorzugten Ausgestaltung der Erfindung ist das obere Element der Vorrichtung mit einer ersten Komponente und einer zweiten Komponente an einer Teilungsebene zweigeteilt ausgebildet. Die erste Komponente des oberen Elementes weist vorteilhaft eine Ausformung zum Einlegen des Kolbens auf.

Nach einer Weiterbildung der Erfindung ist in einem Bereich der Teilungsebene zwischen der ersten Komponente und der zweiten Komponente des oberen Elementes der Vorrichtung ein Zwischenraum als Bereich des Angusses ausgebildet. Der Zwischenraum als Bereich des Angusses ist auch als ein Teilvolumen des Angusses zu verstehen.

Nach einer vorteilhaften Ausgestaltung der Erfindung ist der Absatz des Kolbens zum Verändern des Volumens als Füllmengenausgleich des Gießwerkstoffes innerhalb des Angusses sich in axialer Richtung durch eine in der ersten Komponente des oberen Elementes der Vorrichtung ausgebildete Durchgangsöffnung erstreckend und in den zwischen der ersten Komponente und der zweiten Komponente ausgebildeten Zwischenraum als Teilvolumen des Angusses hineinragend angeordnet. Das Teilvolumen des Angusses wird auch als Bereich des Angusses bezeichnet.

Nach einer Weiterbildung der Erfindung weist der Kolben mindestens einen Stift mit einer konstanten Länge auf, welcher im Bereich des Abschnitts mit der geringeren Dicke des Kolbens in axialer Richtung ausgerichtet angeordnet ist. Der mindestens eine Stift des Kolbens ist sich vorteilhaft durch eine im oberen Element ausgebildete Durchgangsöffnung erstreckend und in den Füllraum zur Aufnahme des Objekts hineinragend, beweglich angeordnet.

Eine weitere bevorzugte Ausgestaltung der Erfindung besteht darin, dass eine Stirnseite des mindestens einen Stiftes des Kolbens an einer Oberseite des im Füllraum angeordneten Objekts anliegt und je nach Abmessung des innerhalb des Füllraums angeordneten Objekts in axialer Richtung in den Füllraum hineinragt.

Die Bewegung beziehungsweise die Anordnung des Stiftes im geschlossenen Zustand der Vorrichtung und damit die Bewegung und Anordnung des Kolbens und auch des Absatzes des Kolbens jeweils in axialer Richtung sind von der Abmessung des innerhalb des Füllraums angeordneten Objekts in axialer Richtung abhängig. Die Länge des Hineinragens des Stiftes des Kolbens in den Füllraum ist direkt proportional zur Länge des Hineinragens des Absatzes des Kolbens als Eintauchtiefe in das Volumen des Angusses.

Der Kolben weist vorteilhaft eine Vielzahl an Stiften, insbesondere drei oder vier, mit jeweils einer konstanten Länge auf, welche im Bereich des Abschnitts mit der geringeren Dicke umfänglich um den Absatz des Kolbens in axialer Richtung ausgerichtet angeordnet sind.

Nach einer weiteren bevorzugten Ausgestaltung der Erfindung ist der Füllraum als eine Ausformung zum Einlegen des Objekts im unteren Element der Vorrichtung ausgebildet. Das untere Element weist dabei vorteilhaft mindestens ein festes Widerlager auf.

Das mindestens eine feste Widerlager ist bevorzugt als zylindrischer Bolzen ausgebildet, welcher sich in den Füllraum erstreckend derart angeordnet ist, dass das Objekt mit einer Unterseite auf einer Stirnseite des Bolzens aufliegt. Der Bolzen ist dabei durch eine im Boden des unteren Elementes ausgebildete Durchgangsöffnung unbeweglich in das untere Element eingeführt angeordnet.

Das untere Element weist vorteilhaft eine Vielzahl an Widerlagern, insbesondere drei oder vier, auf, welche umfänglich in axialer Richtung ausgerichtet angeordnet sind.

Nach einer Weiterbildung der Erfindung ist das zu ummantelnde Objekt rotationssymmetrisch ausgebildet. Damit sind auch der Füllraum, der Kolben und der Anguss, das obere und das untere Element sowie folglich die Vorrichtung bevorzugt rotationssymmetrisch ausgebildet.

Die vorteilhafte Ausgestaltung der Erfindung, insbesondere im Hinblick auf die Kompensation großer Abweichungen äußerer Abmessungen von zu ummantelnden Objekten und das konstante Gesamtvolumen für den Gießwerkstoff innerhalb der Vorrichtung, ermöglicht die Verwendung der Vorrichtung zum Spritzgießen und Umspritzen von mit einer Isolationsschicht ummantelten Blechpaketen.

Die Aufgabe wird zudem durch ein erfindungsgemäßes Verfahren zur Herstellung von mit einer Isolationsschicht ummantelten Blechpaketen mit einer voranbeschriebenen Vorrichtung zum Spritzgießen und Umspritzen von Objekten gelöst.

Die erfindungsgemäße Vorrichtung zum Spritzgießen und Umspritzen von Objekten weist zusammenfassend diverse Vorteile auf:
- Kompensation großer Abweichungen äußerer Abmessungen von zu ummantelnden Objekten, insbesondere von Blechpaketen, mit einer Dosierung der Füllmenge innerhalb des Füllraums in einer Vorrichtung mit variablem inneren Volumen bei jeweils konstantem Volumen für den einzufüllenden Gießwerkstoff, dabei werden ummantelte Objekte speziell mit in axialer Richtung gleichen Ausdehnungen erzeugt, während die zu ummantelnden Objekte in axialer Richtung variierende Ausdehnungen aufweisen,
- dünnwandige Umspritzung von paketierten Blechlagen möglich,
- Verwendung einer stets konstanten Menge an Gießwerkstoff, insbesondere an Kunststoff, beim Befüllen der Vorrichtung, wobei der erfindungsgemäße Volumenausgleich beziehungsweise Füllmengenausgleich gewährleistet, dass das Volumen pro zu füllender Kavität bei variabler Ausdehnung des zu ummantelnden Objekts konstant ist, dabei
- Koppeln der Steuerung des Volumenausgleichs an die Abmessung des Objekts in axialer Richtung, insbesondere an die Höhe des Objekts,
- optimale Füllung ohne Überladung des Füllraums beziehungsweise der Kavität mit optimaler Verdichtung des Materials zum Ummanteln des Objekts und
- sehr hohe Maßhaltigkeit auch bei Geometrien mit sehr hohen Toleranzanforderungen.

Weitere Einzelheiten, Merkmale und Vorteile von Ausgestaltungen der Erfindung ergeben sich aus der nachfolgenden Beschreibung eines Ausführungsbeispiels mit Bezugnahme auf die zugehörigen Zeichnungen. Es zeigen:
- Fig. 1:: eine Vorrichtung zum Spritzgießen und Umspritzen von Objekten, insbesondere von Blechpaketen mit abweichenden äußeren Abmessungen, mit einem in der Vorrichtung angeordneten Blechpaket
- Fig. 1a:: mit einem in der Vorrichtung angeordneten Blechpaket mit minimaler Höhe,
- Fig. 1b:: mit einem in der Vorrichtung angeordneten Blechpaket mit maximaler Höhe und
- Fig. 2:: ein ummanteltes Blechpaket mit rotationssysmmetrischer Form.

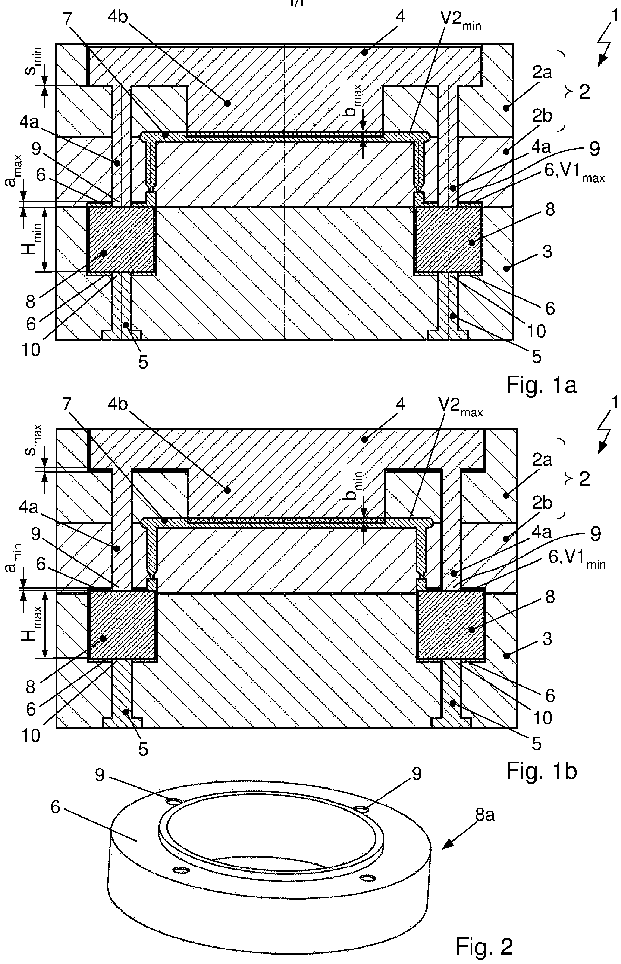

In den **Fig. 1a und 1b** ist jeweils eine Vorrichtung 1 zum Spritzgießen und Umspritzen von Objekten 8, insbesondere von Blechpaketen mit abweichenden äußeren Abmessungen, mit einem in der Vorrichtung 1 angeordneten Blechpaket 8 mit minimaler Höhe, gemäß Fig. 1a, und mit einem Blechpaket 8 mit maximaler Höhe, gemäß Fig. 1b, gezeigt. Die abweichenden äußeren Abmessungen der Blechpakete 8, im Speziellen der Höhe, ergeben sich vor allem aus unterschiedlichen Stärken der gestapelten Blechlagen.

Die größeren Toleranzen der Abmessungen der Blechlagen und damit des Blechpaketes 8 treten im Wesentlichen in der Höhe, das heißt in der Stapelrichtung der Blechlagen, auf. In den anderen Richtungen sind die die äußeren Abmessungen des Blechpaketes 8 beeinflussenden Toleranzen vernachlässigbar, da diese Maße durch Werkzeuge, beispielsweise Stanzwerkzeuge, sehr genau vorgegeben werden können. Die Vorrichtung 1 ist folglich derart ausgebildet, dass die Abweichungen in der Höhe des zu ummantelnden Objekts 8 kompensiert werden, während in den anderen geometrischen Abmessungen keine zu den üblichen Maßnahmen zusätzlichen Vorkehrungen zum Ausgleichen von Toleranzen vorgesehen sind.

Die Vorrichtung 1 weist als ein Spritzgusswerkzeug eine Gussform mit einem oberen Element 2 und einem unteren Element 3 auf. Das obere Element 2 ist in Bezug auf das ortsfeste untere Element 3 beweglich. Das obere Element 2 ist zudem mit einer ersten Komponente 2a und einer zweiten Komponente 2b zweigeteilt ausgebildet.

Das untere Element 3 der Gussform ist mit einer Ausformung zum Einlegen des zu umspritzenden Objekts 8 und festen Widerlagern 5 versehen. Die Ausformung weist dabei die äußeren Abmessungen des Objekts 8 zuzüglich eines Volumens zur allseitigen Ummantelung auf. Das Volumen und damit die einzelnen Maße der Ummantelung in unterschiedlichen geometrischen Dimensionen entsprechen jeweils der Dicke des Mantels, insbesondere der Isolationsschicht des Blechpaketes 8.

Die festen Widerlager 5 sind als Stifte oder Bolzen durch im Boden des unteren Elementes 3 ausgebildete Durchgangsöffnungen unbeweglich und starr in das untere Element 3 eingeführt und erstrecken sich vom Boden durch die Durchgangsöffnungen hindurch bis in die Ausformung zur Aufnahme des zu umspritzenden Objekts 8. Die Bolzen sind jeweils mit einem Kragen ausgebildet, welcher den Bolzen als Anschlag im unteren Element 3 arretiert. Der Kragen des Bolzens und der Boden des unteren Elementes 3 sind im montierten Zustand der Vorrichtung 1 bündig abschließend angeordnet.

Das Objekt 8 wird zum Umspritzen in die Ausformung des unteren Elementes 3 eingelegt, wobei das Objekt 8 mit einer Unterseite derart auf den in die Ausformung hineinragenden Stirnseiten der Widerlager 5 in Auflagebereichen 10 aufliegt, dass das Objekt 8 von einem Boden der Ausformung gleichmäßig beabstandet angeordnet ist. Zwischen der Unterseite des Objekts 8 und dem Boden der Ausformung verbleibt ein Spalt zum Ausgießen, beispielsweise mit einem Kunststoff, wobei die Größe des Abstandes und damit die Breite des Spaltes von den Abmessungen der unterschiedlichen Blechpakete 8 unabhängig sind.

Zudem sind die Seitenflächen des Objekts 8 und der Ausformung zueinander beabstandet, jeweils einen Spalt ausbildend angeordnet. Die Abstände und zusammenhängenden Spalte zwischen der Unterseite des Objekts 8 und dem Boden der Ausformung sowie zwischen den Seitenflächen des Objekts 8 und der Ausformung definieren Bereiche des Füllraums 6 beziehungsweise der nachfolgend aufgebrachten Ummantelung des Objekts 8.

Das untere Element 3 und das obere Element 2 der Gussform sind in einer Teilungsebene voneinander getrennt. Das aus der ersten Komponente 2a und der zweiten Komponente 2b ausgebildete obere Element 2 ist in senkrechter Richtung zur Teilungsebene beweglich.

Innerhalb des oberen Elementes 2 ist ein beweglicher Kolben 4 integriert, welcher mit Stiften 4a und einem Absatz 4b zum Füllmengenausgleich ausgebildet ist. Die Stifte 4a und der Absatz 4b des Kolbens 4 werden auch als Kolbenmechanik bezeichnet. Der Kolben 4 ist innerhalb und in Bezug auf das obere Element 2 der Gussform beweglich.

Die erste Komponente 2a des oberen Elementes 2 ist mit einer Ausformung zum Einlegen des Kolbens 4 versehen. Die Ausformung weist dabei die äußeren Abmessungen des Kolbens 4 zuzüglich einer Toleranz zur Bewegung des Kolbens 4 auf. Der Kolben ist vorteilhaft zylindrisch, insbesondere kreiszylindrisch, ausgebildet.

Der Kolben 4 ist mit einem Abschnitt mit einer geringeren Dicke und einem Abschnitt mit einer größeren Dicke ausgebildet, wobei die Abschnitte koaxial beziehungsweise konzentrisch zueinander angeordnet sind und eine Stirnseite des Kolbens 4 eben ist. Die ebene Stirnseite schließt die Vorrichtung 1 nach außen ab.

Der Abschnitt mit der größeren Dicke erstreckt sich in axialer Richtung durch eine in der ersten Komponente 2a ausgebildete Durchgangsöffnung, dient als Absatz 4b zum Füllmengenausgleich und ragt im geschlossenen Zustand der Vorrichtung 1 in einen zwischen der erste Komponente 2a und der zweiten Komponente 2b ausgebildeten Zwischenraum. Die Durchgangsöffnung ist als Verbindung zwischen der Ausformung zum Einlegen des Kolbens 4 und dem Zwischenraum angeordnet.

Der Zwischenraum ist dabei im Wesentlichen in Richtung der Teilungsebene ausgerichtet und über in der zweiten Komponente 2b ausgebildete Öffnungen mit dem Füllraum 6 mit dem in die Vorrichtung 1 eingelegten Objekt 8 verbunden. Der Zwischenraum und die den Zwischenraum mit dem Füllraum 6 verbindenden Öffnungen sind Bereiche des Angusses 7 der Gussform und dienen als zusätzliches Füllvolumen der Aufnahme von überschüssiger Füllmenge des Gießwerkstoffes.

Die Stifte 4a des Kolbens 4 sind umfänglich im Bereich des Abschnitts mit der geringeren Dicke des Kolbens 4 und damit auch umfänglich um den Absatz 4b mit gleichem Abstand zur Symmetrieachse sowie in axialer Richtung des Kolbens 4 angeordnet. Die Stifte 4a sind durch die erste Komponente 2a und die zweite Komponente 2b des oberen Elementes 2 ausgebildete Durchgangsöffnungen beweglich in das obere Element 2 eingeführt und erstrecken sich vom Abschnitt mit der geringeren Dicke des Kolbens 4 durch die Durchgangsöffnungen hindurch bis in die Ausformung zur Aufnahme des zu umspritzenden Objekts 8. Die in der ersten Komponente 2a und der zweiten Komponente 2b ausgebildeten Durchgangsöffnungen korrespondieren derart miteinander, dass jeweils eine Durchgangsöffnung durch das obere Element 2 für jeden Stift 4a vorhanden ist.

Die Stirnseiten der Stifte 4a liegen im geschlossenen Zustand der Vorrichtung 1 an einer Oberseite des in die Ausformung des unteren Elementes 3 eingelegten Objekts 8 zum Umspritzen in Auflagebereichen 9 an. Die zweite Komponente 2b des oberen Elementes 2 der Gussform ist im Bereich der Trennebene zwischen dem oberen Element 2 und dem unteren Element 3 mit einer zur im unteren Element 3 ausgebildeten Ausformung zur Aufnahme des Objekts 8 korrespondierenden Ausnehmung ausgebildet. Die Ausnehmung des oberen Elementes 2 und die Ausformung des unteren Elementes 3 bilden gemeinsam den Füllraum 6 als Volumen zur Aufnahme des Objekts 8 und des Gießwerkstoffes als Ummantelung des Objekts 8.

Die Stifte 4a ragen bei der Auflage mit der Stirnseite auf der Oberseite des Objekts 8 in die Ausnehmung hinein. Zwischen der Oberseite des Objekts 8 und der Ausnehmung ist ein gleichmäßiger Abstand, als ein Spalt a zum Ausgießen ausgebildet, beispielsweise mit einem Kunststoff, wobei die Größe des Abstandes und damit die Breite des Spaltes a von den Abmessungen der unterschiedlichen Blechpakete 8, insbesondere der Höhe des Objekts 8, abhängig sind.

Die Abstände und zusammenhängenden Spalte zwischen der Unterseite des Objekts 8 und dem Boden der Ausformung des unteren Elementes 3 der Gussform sowie zwischen den Seitenflächen des Objekts 8 und der Ausformung des unteren Elementes 3 der Gussform sowie zwischen der Oberseite des Objekts 8 und der Ausnehmung der zweiten Komponente 2b des oberen Elementes 2 der Gussform umschließen Bereiche des Füllraums 6 beziehungsweise der nachfolgend aufgebrachten Ummantelung des Objekts 8. Der Füllraum 6 ist mit dem Anguss 7 verbunden.

In den Fig. 1a und 1b ist die Vorrichtung 1 jeweils im geschlossenen Zustand mit eingelegtem Blechpaket 8, eingefülltem Gießwerkstoff und montiertem Kolben 4 gezeigt. Der Kolben 4 ist in Fig. 1a im unteren Totpunkt und in Fig. 1b im oberen Totpunkt angeordnet. Als Totpunkte werden die jeweils minimal oder maximal möglichen Endlagen des Kolben 4 bezeichnet, welche sich durch die Dicke des Blechpaketes 8 bei Ausschöpfung der gesamten möglichen Toleranz ergeben. Bei minimal möglicher Dicke des Blechpaketes 8 ist der Kolben 4 im unteren Totpunkt und bei maximal möglicher Dicke des Blechpaketes 8 ist der Kolben 4 im oberen Totpunkt angeordnet.

Mittels eines nicht dargestellten Antriebs ist das obere Element der Gussform zusammen mit dem Kolben 4 als Einheit in axialer Richtung lotrecht nach oben oder unten bewegbar, um das Einlegen des Objekts 8 zu gewährleisten. Durch ein Verfahren des oberen Elementes 2, insbesondere der zweiten Komponente 2b und anschließend der ersten Komponente 2a oder einem gemeinsamen Bewegen der Komponenten 2a, 2b mit dem Kolben 4 nach unten wird die Vorrichtung 1 geschlossen.

Das zu umspritzende Objekt 8, insbesondere das mit einer Isolationsschicht zu versehende Blechpaket 8, wird im geöffneten Zustand der Vorrichtung 1 mit der Unterseite in die Ausformung des unteren Elementes 3 auf die Stirnseiten der bolzenförmigen Widerlager 5 eingelegt. Beim Vorgang des Schließens der Vorrichtung 1 wird auch die Ausformung mit dem nunmehr darin eingelegten Objekt 8 verschlossen, wobei die Ausformung des unteren Elementes 3 und die Ausnehmung des oberen Elementes 2 ein geschlossenes Volumen bilden, welches auch den Anguss 7 beinhaltet. Das zu ummantelnde Objekt 8 ist derart in der Vorrichtung 1 angeordnet, dass zwischen dem Objekt 8 und der Vorrichtung 1 vollumfänglich und vollflächig ein Spalt zum Ausgießen mit dem Gießwerkstoff verbleibt. Lediglich in den Auflagebereichen 9 der Stifte 4a und den Auflagebereichen 10 der Widerlager 5 liegt das Objekt 8 an Komponenten der Vorrichtung 1 an.

Beim Vorgang des Schließens der Vorrichtung 1 legen sich die in axialer Richtung beweglichen Stifte 4a des Kolbens 4 mit den Stirnseiten auf der Oberseite an das Objekt 8 an. Dabei wird der Kolben 4 je nach Ausdehnung des Objekts 8 in der Höhe, welche in axialer Richtung ausgerichtet ist, in Bezug auf das obere Element 2 innerhalb des oberen Elementes 2 in axialer Richtung bewegt. Nach dem Beenden des Vorgangs des Schließens der Vorrichtung 1 hat der Kolben 4 seine Endlage erreicht und wird gegen den Spritzdruck mechanisch verriegelt.

Bei einer minimalen Ausdehnung Hₘᵢₙ des Objekts 8 in der Höhe nach Fig. 1a ist der Kolben 4 in der Lage am unteren Totpunkt lediglich minimal ausgelenkt. Der Abstand s zwischen dem Kolben 4, insbesondere dem Abschnitt mit der geringeren Dicke, und der ersten Komponente 2a des oberen Elementes 2 ist mit sₘᵢₙ minimal und kann im Grenzfall Null sein. Dann liegt der Kolben 4 an der ersten Komponente 2a des oberen Elementes 2 an.

Während der Spalt zwischen der Unterseite des Objekts 8 und dem Boden der Ausformung des unteren Elementes 3 der Gussform sowie zwischen den Seitenflächen des Objekts 8 und der Ausformung des unteren Elementes 3 der Gussform, abgesehen von vernachlässigbaren Abweichungen in der Breite des Objekts 8, unabhängig vom Objekt 8 konstant sind, weist der Spalt a zwischen der Oberseite des Objekts 8 und der Ausnehmung der zweiten Komponente 2b des oberen Elementes 2 der Gussform ein Maximum aₘₐₓ auf. Der Spalt a umschließt ein maximales Volumen V1ₘₐₓ. Das vom Spalt a umschlossene Volumen V1 ist von der Ausdehnung H des Objekts 8 in der Höhe abhängig. Zudem ragt der Absatz 4b des Kolbens 4 mit einer maximalen Eintauchtiefe in das Volumen V2 des Angusses 7 hinein. Der Kolben 4 verdrängt mit dem in das Volumen V2 des Angusses 7 eingetauchten Abschnittes des Absatzes 4b ein maximales Volumen des Angusses 7 als Überschuss des Füllvolumens, sodass der Anguss 7 lediglich ein minimales Volumen V2ₘᵢₙ für den Gießwerkstoff aufweist. Da das Gesamtvolumen der Vorrichtung 1 für den Gießwerkstoff, das heißt der Füllraum 6 abzüglich des Volumens des Objekts 8 und das Volumen des Angusses V2 konstant sind, sind das Volumen V1 des Spaltes a beziehungsweise das vom Absatz 4b des Kolbens 4 verdrängte Volumen des Angusses 7 umgekehrt proportional zum Volumen V2 des Angusses 7.

Bei einer maximalen Ausdehnung Hₘₐₓ des Objekts 8 in der Höhe nach Fig. 1b ist der Kolben 4 in der Lage am oberen Totpunkt aufgrund der Stifte 4a mit konstanter Länge maximal ausgelenkt. Der Abstand s zwischen dem Kolben 4 und der ersten Komponente 2a des oberen Elementes 2, insbesondere dem Abschnitt mit der geringeren Dicke, ist mit sₘₐₓ maximal.

Zudem weist der Spalt a zwischen der Oberseite des Objekts 8 und der Ausnehmung der zweiten Komponente 2b des oberen Elementes 2 der Gussform ein Minimum aₘᵢₙ auf, da die Höhe des Füllraums 6 der Vorrichtung 1, das heißt die Höhe des von der im unteren Element 3 ausgebildeten Ausformung und von der im oberen Element 2 ausgebildeten Ausnehmung umschlossenen Volumens, konstant ist. Der Spalt a umschließt dabei ein minimales Volumen V1ₘᵢₙ, da die Ausdehnung H des Objekts 8 in der Höhe mit Hₘₐₓ maximal ist.

Der Absatz 4b des Kolbens 4 ragt nur minimal in das Volumen V2 des Angusses 7 hinein, sodass die Eintauchtiefe b des Absatzes 4b in das Volumen V2 des Angusses 7 minimal ist. Der Kolben 4 verdrängt somit mit dem in das Volumen V2 des Angusses 7 eingetauchten Abschnittes des Absatzes 4b lediglich ein minimales Volumen des Angusses 7, sodass der Anguss 7 ein maximales Volumen V2ₘₐₓ für den Gießwerkstoff aufweist.

In Abhängigkeit von der Ausdehnung H des Objekts 8 in der Höhe verändert sich folglich der Spalt a und damit das Volumen V1 als Teilbereich des Füllraums 6, welcher durch die Veränderung des Spaltes a variiert. Mit Hilfe der Ausbildung des Kolbens 4 wird mit der Veränderung der Ausdehnung H des Objekts 8 auch die Eintauchtiefe b des Absatzes 4b in das Volumen V2 des Angusses 7 als Teilbereich des gesamten Volumens des Gießwerkstoffes verändert. Die Volumina V1 des Spaltes a als Teilbereich des Füllraums 6 und V2 des Angusses 7 jeweils als Teilbereiche des gesamten Volumens des Gießwerkstoffes werden gegenläufig verändert und weisen stets den gleichen Betrag auf.

Da die Volumina V1 und V2 jeweils Teilbereiche des gesamten Volumens des Gießwerkstoffes darstellen und sich mit einer Vergrößerung des Volumens V1 das Volumen V2 gleichermaßen verringert und sich mit einer Verringerung des Volumens V1 das Volumen V2 gleichermaßen vergrößert, bleibt das gesamte Volumen des Gießwerkstoffes innerhalb der Vorrichtung 1 unabhängig von der Ausdehnung des Objekts 8 in der Höhe konstant.

Je nach Ausdehnung des Objekts 8 in der Höhe wird der Gießwerkstoff in das Volumen V1 eingebracht oder als Volumen V2 in den Anguss 7 verlagert. Die Füllmenge bleibt in Bezug auf das gesamte mit Gießwerkstoff zu füllende Volumen bei jeder Ausdehnung des Objekts 8 in Richtung der Höhe H gleich. Lediglich die Verteilung der Füllmengen innerhalb der Vorrichtung 1, insbesondere innerhalb des Füllraums 6, und damit die Ummantelung als Außenbeschichtung des Objekts 8, sind verschieden.

Die Ummantelung ist zudem vollumfänglich und vollflächig geschlossen ausgebildet, wobei lediglich wenige Bereiche des rotationssysmmetrisch ausgebildeten, ummantelten Objekts 8a keine Ummantelung als Beschichtung aufweisen, wie aus **Fig. 2** hervorgeht.

Dabei sind die Auflagebereiche 9 der Stifte 4a des Kolbens 4 an der Oberseite des Objekts 8a und die nicht dargestellten Auflagebereiche 10 der bolzenförmigen Widerlager 5 an der Unterseite des Objekts 8a nicht mit Ummantelung überzogen und können nachbearbeitet werden oder beispielsweise für das Anordnen von Anschlüssen genutzt werden.

### Bezugszeichenliste

- 1: Vorrichtung
- 2: oberes Element Gussform
- 2a: erste Komponente oberes Element 2
- 2b: zweite Komponente oberes Element 2
- 3: unteres Element Gussform
- 4: beweglicher Kolben oberes Element 2
- 4a: Stift Kolben 4 oberes Element 2
- 4b: Absatz Kolben 4 zum Füllmengenausgleich
- 5: Widerlager
- 6: Füllraum
- 7: Anguss
- 8: Objekt, Blechpaket
- 8a: ummanteltes Objekt 8
- 9: Auflagebereich Stift 4a Objekt 8
- 10: Auflagebereich Widerlager 5 Objekt 8

- a: Abstand
- b: Eintauchtiefe Absatz 4b
- H: Höhe des Objekts, Blechpaketes 8
- s: Auslenkung
- V1: variables Volumen Blechpaket 8
- V2: variables Volumen Anguss

- max: maximal
- min: minimal

## Patentansprüche

1. Vorrichtung (1) zum Spritzgießen und Umspritzen von Objekten (8), insbesondere zur Herstellung von mit einer Isolationsschicht ummantelten Blechpaketen, aufweisend ein oberes Element (2) und ein unteres Element (3), welche ein zusammenhängendes Volumen aus einem Füllraum (6) zur Aufnahme des Objekts (8) und von Gießwerkstoff sowie eines Angusses (7) zur Aufnahme von Gießwerkstoff umschließen, wobei das obere Element (2) in Bezug auf das untere Element (3) beweglich angeordnet ist und innerhalb des oberen Elementes (2) ein in Bezug auf das obere Element (2) beweglicher Kolben (4) integriert derart angeordnet ist, dass die Lage des Kolbens (4) abhängig von einer Abmessung des Objekts (8) in einer axialen Richtung variiert wird, **dadurch gekennzeichnet, dass** der Kolben (4) einen Abschnitt mit einer geringeren Dicke und einen Abschnitt mit einer größeren Dicke aufweist, welche in der axialen Richtung koaxial zueinander angeordnet sind, wobei der Abschnitt mit der geringeren Dicke am Umfang des Abschnitts mit der größeren Dicke angeordnet ist und der Abschnitt mit der größeren Dicke als ein Absatz (4b) zum Verändern eines Volumens (V2) als Füllmengenausgleich des Gießwerkstoffes innerhalb des Angusses (7) ausgebildet ist, sodass unabhängig von der Abmessung des Objekts (8) in der axialen Richtung und eines mit der Abmessung des Objekts (8) in der axialen Richtung variierenden Volumens (V1) das Gesamtvolumen für den Gießwerkstoff innerhalb der Vorrichtung (1) konstant ist.

2. Vorrichtung (1) nach Anspruch 1, **dadurch gekennzeichnet, dass** das obere Element (2) mit einer ersten Komponente (2a) und einer zweiten Komponente (2b) an einer Teilungsebene zweigeteilt ausgebildet ist und die erste Komponente (2a) des oberen Elementes (2) eine Ausformung zum Einlegen des Kolbens (4) aufweist.

3. Vorrichtung (1) nach Anspruch 2, **dadurch gekennzeichnet, dass** in einem Bereich der Teilungsebene zwischen der ersten Komponente (2a) und der zweiten Komponente (2b) des oberen Elementes (2) ein Zwischenraum als Bereich des Angusses 7 ausgebildet ist.

4. Vorrichtung (1) nach einem der Ansprüche 1 bis 3, **dadurch gekennzeichnet, dass** der Absatz (4b) des Kolbens (4) sich in axialer Richtung durch eine in der ersten Komponente (2a) des oberen Elementes (2) ausgebildete Durchgangsöffnung erstreckend und in den zwischen der ersten Komponente (2a) und der zweiten Komponente (2b) ausgebildeten Zwischenraum als Teilvolumen des Angusses (7) hineinragend angeordnet ist.

5. Vorrichtung (1) nach einem der Ansprüche 1 bis 4, **dadurch gekennzeichnet, dass** der Kolben (4) mindestens einen Stift (4a) mit einer konstanten Länge aufweist, wobei der Stift (4a) im Bereich des Abschnitts mit der geringeren Dicke des Kolbens (4) in axialer Richtung ausgerichtet angeordnet ist.

6. Vorrichtung (1) nach Anspruch 5, **dadurch gekennzeichnet, dass** der mindestens eine Stift (4a) des Kolbens (4) sich durch eine im oberen Element (2) ausgebildete Durchgangsöffnung erstreckend und in den Füllraum (6) zur Aufnahme des Objekts (8) hineinragend, beweglich angeordnet ist.

7. Vorrichtung (1) nach Anspruch 6, **dadurch gekennzeichnet, dass** eine Stirnseite des mindestens einen Stiftes (4a) an einer Oberseite des im Füllraum (6) angeordneten Objekts (8) anliegt und je nach Abmessung des innerhalb des Füllraums (6) angeordneten Objekts (8) in axialer Richtung in den Füllraum (6) hineinragt.

8. Vorrichtung (1) nach einem der Ansprüche 1 bis 7, **dadurch gekennzeichnet, dass** der Füllraum (6) als eine Ausformung zum Einlegen des Objekts (8) im unteren Element (3) ausgebildet ist und das untere Element (3) mindestens ein festes Widerlager (5) aufweist.

9. Vorrichtung (1) nach Anspruch 8, **dadurch gekennzeichnet, dass** das mindestens eine feste Widerlager (5) als zylindrischer Bolzen ausgebildet ist, welcher sich in den Füllraum (6) erstreckend derart angeordnet ist, dass das Objekt (8) mit einer Unterseite auf einer Stirnseite des Bolzens aufliegt.

10. Verwendung einer Vorrichtung (1) nach einem der Ansprüche 1 bis 9 zum Spritzgießen und Umspritzen von mit einer Isolationsschicht ummantelten Blechpaketen.

11. Verfahren zur Herstellung von mit einer Isolationsschicht ummantelten Blechpaketen mit einer Vorrichtung (1) zum Spritzgießen und Umspritzen von Objekten (8) nach einem der Ansprüche 1 bis 9, aufweisend folgende Schritte:
- Einlegen des Objekts (8) in eine Ausformung eines unteren Elementes (3) in einem geöffneten Zustand der Vorrichtung (1), wobei
- das Objekt (8) mit einer Unterseite von einem Boden der Ausformung gleichmäßig beabstandet, einen Spalt ausbildend angeordnet wird und
- Seitenflächen des Objekts (8) und der Ausformung zueinander beabstandet, jeweils einen Spalt ausbildend angeordnet sind, wobei die Spalte zwischen der Unterseite des Objekts (8) und dem Boden der Ausformung sowie zwischen den Seitenflächen des Objekts (8) und der Ausformung zusammenhängend Bereiche eines Füllraums (6) definieren,
- Verschließen der Vorrichtung (1) durch Bewegen eines oberen Elementes (2) und eines Kolben (4) in einer axialen Richtung lotrecht nach unten, wobei
- die Ausformung des unteren Elementes (3) mit dem darin eingelegten Objekt (8) derart verschlossen wird, dass die Ausformung und eine Ausnehmung des oberen Elementes (2) sowie ein Anguss (7) ein geschlossenes Volumen bilden und zwischen dem Objekt (8) und der Vorrichtung (1) vollumfänglich und vollflächig ein Spalt zum Ausgießen verbleibt,
- der Kolben (4) je nach Ausdehnung des Objekts (8) in axialer Richtung in Bezug auf das obere Element (2) innerhalb des oberen Elementes (2) in axialer Richtung bewegt wird,
- Verriegeln des Kolbens (4) und
- Befüllen des Füllraums der Vorrichtung (1) mit einem Gießwerkstoff, wobei je nach Ausdehnung des Objekts (8) in axialer Richtung ein Anteil des Gießwerkstoffs in ein in der axialen Richtung variierendes Volumen (V1) eingebracht oder als ein Volumen (V2) in den Anguss (7) verlagert wird.

12. Verfahren nach Anspruch 11, **dadurch gekennzeichnet, dass** das in der axialen Richtung variierende Volumen (V1) und das Volumen (V2) des Angusses (7) als Teilbereiche des gesamten Volumens des Gießwerkstoffes abhängig von der Ausdehnung des Objekts (8) in axialer Richtung gegenläufig verändert werden und das gesamte Volumen des Gießwerkstoffes unabhängig von der Ausdehnung des Objekts (8) in axialer Richtung stets den gleichen Betrag aufweist.

13. Verfahren nach Anspruch 11 oder 12, **dadurch gekennzeichnet, dass** beim Verschließen der Vorrichtung (1) in axialer Richtung bewegliche Stifte (4a) des Kolbens (4) mit Stirnseiten auf einer Oberseite an das Objekt (8) angelegt werden.

14. Verfahren nach einem der Ansprüche 11 bis 13, **dadurch gekennzeichnet, dass** das Objekt (8) beim Einlegen in die Ausformung des unteren Elementes (3) mit einer Unterseite in Auflagebereichen (10) auf in die Ausformung hineinragende Stirnseiten von Widerlagern (5) aufgelegt wird.

15. Verfahren nach einem der Ansprüche 11 bis 14, **dadurch gekennzeichnet, dass** beim Vorgang des Verschließens der Vorrichtung (1) das obere Element (2) zusammen mit dem Kolben (4) als eine Einheit bewegt wird.

## Claims

1. A device (1) for injection moulding and encapsulating objects (8), in particular for the production of lamination packets encapsulated within an insulating layer, having an upper element (2) and a lower element (3) which enclose a continuous volume of a filling space (6) for receiving the object (8) and of casting material as well as a sprue (7) for receiving casting material, whereby the upper element (2) is arranged movably in relation to the lower element (3) and a piston (4) that is movable with respect to the upper element (2) is integrally arranged within the upper element (2) such that the position of the piston (4) is varied in an axial direction depending on a dimension of the object (8), **characterised in that** the piston (4) has a section with a lesser thickness and a section with a greater thickness that are arranged coaxially with each other in the axial direction, whereby the section with the lesser thickness is arranged on the circumference of the section with the greater thickness, and the section with the greater thickness is formed as an indent (4b) for changing a volume (V2) as filling quantity compensation of the casting material within the sprue (7), so that, the total volume for the casting material within the device (1) is constant independent of the dimension of the object (8) in the axial direction and of a volume (V1) that varies with the dimension of the object (8) in the axial direction.

2. A device (1) according to claim 1, **characterised in that** the upper element (2) is equipped with a first component (2a) and a second component (2b) in two parts on a dividing plane and the first component (2a) of the upper element (2) has a recess for inserting the piston (4).

3. A device (1) according to claim 2, **characterised in that** an intermediate space is formed as a section of the sprue (7) in a section of the dividing plane between the first component (2a) and the second component (2b) of the upper element (2).

4. A device (1) according to one of the claims 1 to 3, **characterised in that** the indent (4b) of the piston (4) extends in the axial direction through a through opening formed in the first component (2a) of the upper element (2) and is arranged projecting into the intermediate space formed between the first component (2a) and the second component (2b) as a partial volume of the sprue (7).

5. A device (1) according to one of claims 1 to 4, **characterised in that** the piston (4) has at least one pin (4a) with a constant length, whereby the pin (4a) is placed in the area of the section with the lesser thickness of the piston (4) aligned in the axial direction.

6. A device (1) according to claim 5, **characterised in that** the at least one pin (4a) of the piston (4) is movably arranged extending through a through opening formed in the upper element (2) and projecting into the filling space (6) for receiving the object (8).

7. A device (1) according to claim 6, **characterised in that** an end face of the at least one pin (4a) lies adjacent to upper side of the object (8) arranged in the filling space (6) and, depending on the dimension of the object (8) arranged within the filling space (6), projects axially into the filling space (6).

8. A device (1) according to one of the claims 1 to 7, **characterised in that** the filling space (6) is formed as a mould for inserting the object (8) in the lower element (3) and the lower element (3) has at least one fixed abutment (5).

9. A device (1) according to claim 8, **characterised in that** the at least one fixed abutment (5) is designed as a cylindrical bolt which is arranged extending into the filling space (6) in such a way that the object (8) rests with an underside on an end face of the bolt.

10. Use of a device (1) according to one of claims 1 to 9 for injection moulding and encapsulating lamination packets coated with an insulating layer.

11. A method for the production of lamination packets coated with an insulating layer with a device (1) for injection moulding and encapsulating objects (8) according to one of claims 1 to 9, comprising the following steps:
- Insertion of the object (8) into a moulding recess of a lower element (3) in an open state of the device (1), whereby
- the underside of the object (8) is uniformly spaced in relation to the floor of the moulding recess, a gap is formed and
- side surfaces of the object (8) and the moulding recess are arranged offset in relation to each other such that the gap is created between the underside of the object (8) and the floor of the moulding space as well as between the side surfaces of the object (8) defined continuous areas of the filling space (6),
- Closing the device (1) by moving an upper element (2) and a piston (4) vertically downwards in an axial direction, whereby
- the moulding recess of the lower element (3) with the object (8) inserted therein is closed in such a way that the moulding recess and a recess of the upper element (2) as well as a sprue (7) form a closed volume and a gap for pouring remains between the object (8) and the device (1) over the entire circumference and over the entire surface,
- the piston (4), depending on the expansion of the object (8), moves in an axial direction within the upper element (2) viewed axially in relation to the upper element (2),
- Sealing the piston (4) and
- filling the filling space of the device (1) with a casting material, whereby, depending on the dimension of the object (8) in the axial direction, a portion of the casting material is introduced into a volume (V1) varying in the axial direction or displaced as a volume (V2) into the sprue (7).

12. A method according to claim 11, **characterised in that** the volume (V1), that may be varied axially, and volume (V2), of the sprue (7) may be moved in a contrary direction to each other as parts of the entire volume of the casting material irrespective of the dimension of the object (8) and the entire volume of the casting material always has the same quantity irrespective of the dimension of the object (8) in the axial direction.

13. A method according to claim 11 or 12, **characterised in that** axially movable pins (4a) of the piston (4) with end faces on an upper side are applied to the object (8) when closing the device (1).

14. A method according to one of the claims 11 to 13, **characterised in that** the object (8) is placed with an underside in abutment areas (10) on end faces of abutments (5) which project into the formation when it is inserted into the moulding recess of the lower element (3).

15. A method according to any of claims 11 to 14, **characterised in that** the upper member (2) is moved together with the piston (4) as a unit in the process of closing the device (1).

## Revendications

1. Dispositif (1) pour le moulage par injection et le surmoulage d'objets (8), en particulier pour la réalisation de paquets de tôles enrobés d'une couche d'isolation, constitué d'un élément supérieur (2) et d'un élément inférieur (3) délimitant un volume continu composé d'un espace de remplissage (6) accueillant l'objet (8) et le matériau à couler, ainsi qu'un culot d'injection (7) accueillant le matériau à couler, l'élément supérieur (2) étant mobile par rapport à l'élément inférieur (3) et l'élément supérieur (2) contenant un piston (4) mobile par rapport à l'élément (2), intégré de telle manière que la position du piston (4) varie dans le sens axial en fonction de la taille de l'objet (8), **caractérisé en ce que** le piston (4) le piston présente une section d'une épaisseur moindre et une section d'une épaisseur plus importante disposées de manière coaxiale l'une par rapport à l'autre dans le sens axial, la section d'une épaisseur moindre étant disposée à la périphérie de la section d'une épaisseur plus importante et la section d'une épaisseur plus importante servant de palier (4b) pour la modification d'un volume (V2) en tant que compensation du volume de remplissage du matériau à couler à l'intérieur du culot d'injection (7), de sorte qu'indépendamment de la taille de l'objet (8) dans le sens axial et d'un volume (V1) variable dans le sens axial en fonction de la taille de l'objet (8), le volume total du matériau à couler dans le dispositif (1) est constant.

2. Dispositif (1) selon la revendication 1, **caractérisé en ce que** l'élément supérieur (2) est constitué de deux parties sur un plan de joint, à savoir un premier composant (2a) et un deuxième composant (2b), le premier composant (2a) de l'élément supérieur (2) étant une forme pour l'insertion du piston (4).

3. Dispositif (1) selon la revendication 2, **caractérisé en ce que,** en une zone du plan de joint entre le premier composant (2a) et le deuxième composant (2b) de l'élément supérieur (2), un interstice est aménagé pour le culot d'injection (7).

4. Dispositif (1) selon l'une des revendications 1 à 3, **caractérisé en ce que** le palier (4b) du piston (4) s'étend dans le sens axial à travers une ouverture de passage pratiquée dans le premier composant (2a) de l'élément supérieur (2) et rentre dans l'interstice ménagé entre le premier composant (2a) et le deuxième composant (2b) en tant que volume partiel du culot d'injection (7).

5. Dispositif (1) selon l'une des revendications 1 à 4, **caractérisé en ce que** le piston (4) présente au moins une tige (4a) d'une longueur constante, cette tige (4a) étant disposée au niveau de la section d'épaisseur moindre du piston (4) dans le sens axial.

6. Dispositif (1) selon la revendication 5, **caractérisé en ce que** au moins une tige (4a) du piston (4) s'étend à travers une ouverture de passage pratiquée dans l'élément supérieur (2) et rentre dans l'espace de remplissage (6) accueillant l'objet (8).

7. Dispositif (1) selon la revendication 6, **caractérisé en ce que** la face avant d'au moins une tige (4a) repose sur la face supérieure de l'objet (8) disposé dans l'espace de remplissage et rentre dans le sens axial dans l'espace de remplissage (6) en fonction de la taille de l'objet (8) disposé dans l'espace de remplissage (6).

8. Dispositif (1) selon l'une des revendications 1 à 7, **caractérisé en ce que** l'espace de remplissage est constitué (6) comme une forme pour l'insertion de l'objet (8) dans l'élément inférieur (3) et que l'élément inférieur (3) présente au moins une butée fixe (5).

9. Dispositif (1) selon la revendication 8, **caractérisé en ce qu'**au moins une butée fixe (5) est composée d'un boulon cylindrique qui s'étend dans l'espace de remplissage (6) de telle manière que la face inférieure de l'objet (8) repose sur une face avant du boulon.

10. Utilisation d'un dispositif (1) selon l'une des revendications 1 à 9 pour le moulage par injection et le surmoulage de paquets de tôles enrobés d'une couche d'isolation.

11. Procédé pour la réalisation de paquets de tôles enrobés d'une couche d'isolation à l'aide d'un dispositif (1) pour le moulage par injection et le surmoulage d'objets (8) selon l'une des revendications 1 à 9, présentant les étapes suivantes :
- Insertion de l'objet (8) dans une forme de l'élément inférieur (3) à l'état ouvert du dispositif (1),
- la face inférieure de l'objet (8) étant uniformément espacée du fond de la forme pour constituer une fente et
- les faces latérales de l'objet (8) et de la forme étant espacées les unes des autres pour constituer une fente, les fentes entre la face inférieure de l'objet (8) et le fond de la forme d'une part et entre les faces latérales de l'objet (8) et les zones continues de la forme définissant un espace de remplissage (6),
- Fermeture du dispositif (1) en abaissant perpendiculairement l'élément supérieur (2) et le piston (4) dans le sens axial,
- la forme de l'élément inférieur (3) étant ainsi fermée avec l'objet (8) qu'elle contient de telle manière que la forme et une cavité de l'élément supérieur (2) et un culot d'injection (7) constituent un volume fermé, avec une fente résiduelle entre l'objet (8) et le dispositif (1) pour le coulage,
- le piston (4) se déplace, selon l'expansion de l'objet (8), dans le sens axial par rapport à l'élément supérieur (2) dans l'élément supérieur (2) dans le sens axial,
- Verrouillage du piston (4) et
- Remplissage de l'espace de remplissage du dispositif (1) avec du matériau à couler, une partie du matériau à couler étant, en fonction de l'expansion de l'objet (8) dans le sens axial, injecté dans un volume variable (V1) dans le sens axial ou stocké sous forme de volume (V2) dans le culot d'injection (7).

12. Procédé selon la revendication 11, **caractérisé en ce que** le volume variable dans le sens axial (V1) et le volume (V2) du culot d'injection (7), en tant que parties du volume total de matériau à couler, se modifient mutuellement dans le sens axial en fonction de l'expansion de l'objet (8) et que le volume total de matériau à couler reste constant indépendamment de l'expansion de l'objet (8) dans le sens axial.

13. Procédé selon la revendication 11 ou 12, **caractérisé en ce que** lors de la fermeture du dispositif (1) les faces avant des tiges (4a) du piston (4) mobiles dans le sens axial reposent sur la face supérieure de l'objet (8).

14. Procédé selon l'une des revendications 11 à 13, **caractérisé en ce que** la face inférieure de l'objet (8), lors de l'insertion dans la forme de l'élément inférieur (3), repose, dans la zone d'appui (10) sur les faces avant des butées (5) rentrant dans la forme.

15. Procédé selon l'une des revendications 11 à 14, **caractérisé en ce que,** lors de la fermeture du dispositif (1), l'élément supérieur (2) se déplace avec le piston (4) comme une seule entité.
